# EUROPEAN PATENT SPECIFICATION

(11) **EP 1 677 970 B1**
(45) Date of publication and mention of the grant of the patent: **21.03.2007**
(21) Application number: 04791925.3
(22) Date of filing: 27.10.2004
(51) Int. Cl.: B32B 3/06, B29C 33/76, B29C 33/50

(54) **AN EXPANDABLE BLADDER FOR TYRE MANUFACTURING APPARATUSES, A MANUFACTURING METHOD THEREOF AND A PROCESS FOR MANUFACTURING TYRES FOR VEHICLE WHEELS**
EXPANDIERBARE BLASE FÜR REIFENHERSTELLUNGSVORRICHTUNGEN, HERSTELLUNGSVERFAHREN DAFÜR UND VERFAHREN ZUR HERSTELLUNG VON REIFEN FÜR FAHRZEUGRÄDER
ENVELOPPE EXPANSIBLE DESTINEE A DES DISPOSITIFS DE FABRICATION DE PNEUS, SON PROCEDE DE FABRICATION ET PROCEDE DE FABRICATION DE PNEUS DE ROUES DE VEHICULES

(30) Priority: 31.10.2003 WO PCT/IT03/00707
(43) Date of publication of application: 12.07.2006
(73) Proprietor: Pirelli Tyre S.p.A., 20126 Milano (IT)
(72) Inventor: LO PRESTI, Gaetano, c/o Pirelli Pneumatici S.p.A., I-20126 Milano (IT); NOTO, Rodolfo, c/o Pirelli Pneumatici S.p.A., I-20126 Milano (IT); DE GESE, Ignazio, c/o Pirelli Pneumatici S.p.A., I-20126 Milano (IT); POZZATI. Giovanni, I-20126 Milan (IT); LOPREVITE, Massimo, c/o Pirelli Pneumatici S.p.A., I-20126 Milano (IT)
(74) Representative: Tansini, Elio Fabrizio
(86) International application number: PCT/IT2004/000591
(87) International publication number: WO 2005/042244

(56) References cited:
- EP-A1- 0 562 384
- GB-A- 1 075 473
- US-A- 3 932 255
- US-A- 4 381 331
- US-A- 4 698 245
- US-A- 4 863 650
- US-A- 5 324 376
- US-B1- 6 458 446
- DATABASE WPI Week 9393 Derwent Publications Ltd., London, GB; Class 35, AN 1993-277752 XP002288515 -& JP 05 192930 A (NIPPON OILS & FATS) 3 August 1993 (1993-08-03)

## Description

The present invention relates to an expandable bladder for tyre manufacturing apparatuses made up of two or more elastomer materials having different compositions, disposed in several mutually-coupled layers, for example.

It is also an object of the invention to provide a method of manufacturing said bladder.

In the embodiments that will be disclosed in the present description, the invention is conceived to be utilised within the scope of tyre manufacturing processes, and more particularly in the building steps of green tyres.

Building of tyres for vehicle wheels generally involves that a carcass sleeve be formed on a building drum, which carcass sleeve comprises one or more carcass plies wound up in a cylindrical conformation and two annular reinforcing structures fitted on the axially opposite end flaps of the carcass ply in coaxial relationship, in such a manner that said flaps axially project from the annular reinforcing structures themselves.

Also applied on the building drum is a pair of sidewalls of elastomer material extending each in the axial extension of one of the end flaps of the carcass ply.

An annular belt structure is made in a separated work station and a tread band can be subsequently associated therewith, at a radially external position. The annular belt structure together with the tread band possibly already applied thereto, are picked up by an annular transfer element to be disposed in coaxial relationship with the carcass sleeve disposed on a building drum, or possibly meanwhile transferred onto a shaping drum. Following axial approaching of two halves of the building or the shaping drum, and simultaneous injection of fluid into the carcass sleeve, the carcass ply is given a toroidal configuration so that it radially expands until it is brought into contact with the inner surface of the belt structure.

Before or after the above described conformation step, the sidewalls and/or end flaps of the carcass ply must be turned up around the annular reinforcing structures to be applied against the carcass ply. To this aim, it is usually provided that associated with the building or the shaping drum be at least one pair of bladders that are expandable between a rest condition at which they are substantially flattened against a cylindrical surface of the drum itself and a work condition at which they are inflated to reach a substantially toroidal conformation.

In the rest condition, the bladders supply a support seat to which the sidewalls and/or end flaps of the carcass ply are applied. During inflation, the bladders lift the sidewalls and/or the carcass ply so as to turn them up around the annular reinforcing structures and apply them against the carcass ply. In particular applications, such as manufacture of tyres for motorcycles, use of expandable bladders may also be provided in order to facilitate a correct application of the belt structure and the possible tread band to the carcass structure. More particularly, it is for this purpose provided that at least two expandable bladders be associated with the annular transfer device used for supporting the belt structure in coaxial relationship with the carcass sleeve; said bladders are located at axially opposite positions and can be activated for bringing the axially opposite edges of the belt structure and the possible tread band towards the carcass ply shaped in a toroidal conformation. Thus correct application of the belt structure is ensured over the whole width, even on carcass structures having a cross-section profile with a strong curvature.

The expandable bladders of the mentioned type, usually made of elastomer material such selected as to promote the duration features and the reduced manufacturing costs of the bladders themselves, can call for the presence of reinforcing inserts, usually of the textile or metallic type, to control the geometric deformations of said bladders during inflation. A bladder of this type is disclosed in US Patent 5 324 376. In addition, particular expedients are required to be adopted so that the sticky nature of the raw elastomer material constituting the different construction elements of the tyre does not hinder a regular separation of the bladder from the tyre under working, when the bladder itself is brought back to the rest condition.

To face up to this requirement, resorting to surface treatments is known, said treatments essentially consisting in setting suitable adhesiveness-preventing substances or cross-linking agents, usually applied by spraying, onto the outer bladder surfaces.

These treatments however involve different problems, originating from the material used as cross-linking or adhesiveness-preventing agent, the necessary equipment and the required time for carrying out the treatment. The surface treatment can also give rise to problems in terms of environmental impact, because the materials used as cross-linking or adhesiveness-preventing/release agents can be dangerous.

The Applicant has further found that use of these substances, even when handled with great precaution, can cause an undesirable pollution of the raw elastomer materials constituting the tyre components, thereby impairing the physical and mechanical-strength features of the finished product.

Associating inserts of butyl material or latex foam with the bladder in the parts designed to get into contact with the tyre components is also known; however, these materials do not always offer sufficient assurances as regards their remaining firmly bonded to the bladder itself.

The state of the art proposes different solutions for reducing adhesion of a bladder to the tyre surfaces. For instance, document JP 63125311 proposes manufacture of an expandable bladder to be used for tyre curing, by means of an elastomer composition comprising an organic rubber and a poly-organo-siloxane containing a specific silicone-modified elastomer as the solubilizing agent.

In document JP 5031724 use of an expandable layered bladder is proposed for tyre curing, which has an inner elastomer layer consisting of butyl rubber and an outer elastomer layer consisting of silicone rubber. The inner layer of butyl rubber ensures a hermetic seal to the steam under pressure, whereas the outer layer of silicone rubber facilitates sliding of the bladder on the inner tyre surfaces and release therefrom when vulcanisation is over.

The Applicant however has found that in manufacturing bladders of this type several difficulties are encountered for obtaining an efficient and reliable union between the inner and outer layers because they are made of different elastomer materials. In particular, the butyl and silicone polymeric bases are not very compatible with each other because they are not able to carry out cross-linking together, i.e. to form stable molecular bonds with each other, which impairs reliability and duration of the layered bladders made in accordance with the known art.

The Applicant has perceived that for obtaining a process advantageously using a layered bladder it is necessary to provide an efficient attachment means between non compatible blends like the butyl one and silicone one, in order to avoid the above mentioned problems.

The Applicant has found that manufacturing the different layers of said bladder in such a manner as to obtain a mechanical engagement between the contacting surfaces makes it possible to obtain bladders made of non-compatible blends that are very reliable and of long duration for use in combination with a tyre-manufacturing apparatus, because the forces tending to separate the different layers as a result both of the inflating pressure and of the forces transmitted to the workpiece, are counteracted by the constraining reactions generated between the contact surfaces of the different layers as a result of said mechanical engagement.

More specifically, in accordance with the present invention, the different materials required in manufacturing a layered bladder are arranged in the form of a continuous elongated element and mutually coupled before or during winding of same on a forming support, so as to obtain a layered coating in which the materials are mutually joined according to an undulated interface profile defining complementary elements of mechanical engagement between the materials themselves. By suitably selecting the shape and mutual arrangement of the elongated elements, the conformation of the undulated interface profile can be controlled with a wide margin, for example as regards the wave width and pitch, so as to increase the coupling surface between the materials.

It is therefore an object of the invention to provide an expandable bladder for tyre manufacturing apparatuses, as defined in claim 1.

It is a further object of the invention to provide a method of manufacturing said bladder, as defined in claim 14.

The invention also proposes new processes and apparatuses for tyre manufacture, as defined in claims 39 and 43, respectively.

Further features and advantages will become more apparent from the detailed description of a preferred but not exclusive embodiment of an expandable bladder for tyre manufacturing apparatuses, of the related manufacturing method, as well as of the processes and apparatuses for manufacturing tyres for vehicle wheels in accordance with the present invention.

This description will' be set out hereinafter with reference to the accompanying drawings, given by way of non-limiting example, in which:
- Fig. 1 diagrammatically shows, in a fragmentary diametrical section, a manufacturing apparatus incorporating expandable bladders in accordance with the invention, during the inflating step;
- Fig. 2 is a fragmentary cross-section view of the bladder in Fig. 1 to an enlarged scale;
- Fig. 3 laterally shows a diagram of the simultaneous laying of a first and a second elongated elements on a forming support, for the purpose of manufacturing the expandable bladder in reference;
- Fig. 3a laterally shows a diagram of the simultaneous laying of a first and a second elongated elements on a forming support, in accordance with a possible alternative embodiment;
- Fig. 3b laterally shows a diagram of the simultaneous laying of a first and a second elongated elements on a forming support, in accordance with a further alternative embodiment;
- Fig. 4 diagrammatically shows a continuous strip-like element in cross section, to be obtained from mutual coupling between the first and second elongated elements, close to the plane along line IV-IV in Fig. 3 for example;
- Fig. 5 shows, by way of example, a deposition diagram of the continuous strip-like element in the form of coils disposed close to each other to obtain an expandable bladder as shown in Fig. 2;
- Fig. 6 diagrammatically shows a continuous strip-like element in cross-section to be obtained by coupling a first and a second elongated elements in a triangular conformation, according to a possible alternative embodiment of the invention;
- Fig. 7 is a fragmentary section view of a deposition diagram of the continuous strip-like element shown in Fig. 6, in the form of coils disposed close to each other.

With reference to the drawings, an expandable bladder for tyre-manufacturing apparatuses in accordance with the present invention has been generally identified by reference numeral 1.

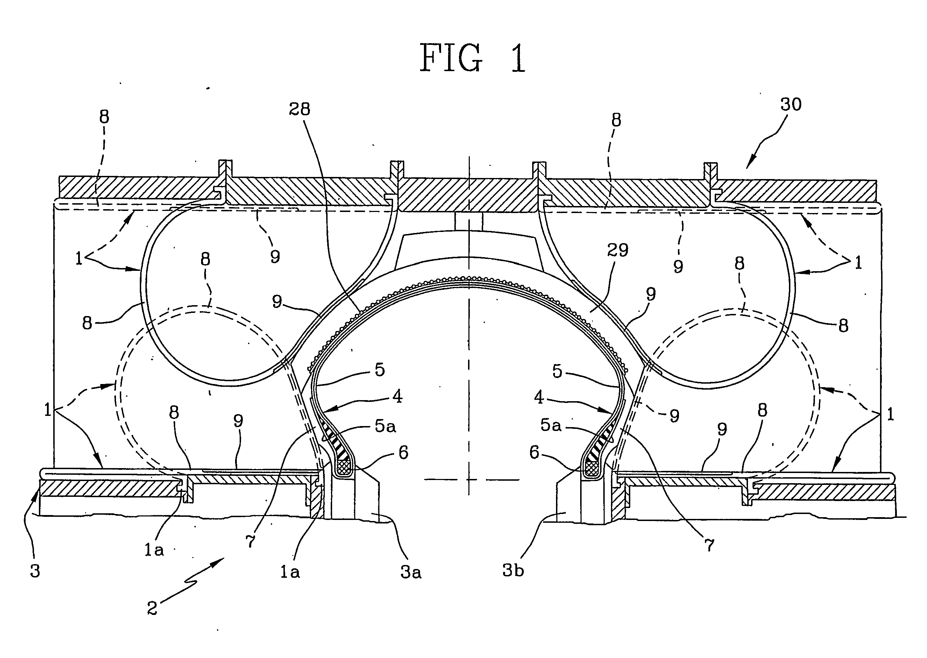

In the embodiment shown in Fig. 1, at least one pair of bladders 1 is used in combination with a manufacturing apparatus generally identified with 2, comprising a building or a shaping drum 3 on which a carcass structure 4 is formed which comprises at least one carcass ply 5, a pair of annular reinforcing structures 6 in engagement with the opposite end flaps 5a of the ply itself, at the tyre areas usually identified as "beads", and a pair of sidewalls 7 of elastomer material extending away from the annular reinforcing structures 6.

The building or shaping drum 3 consists of two halves 3a, 3b that can be mutually approached to cause the carcass structure 4, initially disposed in the form of a cylindrical sleeve on the drum itself, to be shaped into a toroidal conformation in order to apply a radially external portion of the ply 5 against the inner surface of a belt structure 28, possibly coupled with a tread band 29 and retained to a position coaxial with the carcass sleeve by an annular transfer device 30.

In the example in Fig. 1 a first pair of bladders 1 is in engagement, each by respective anchoring tailpieces la formed close to the circumferential edges thereof, with the respective halves of the building or the shaping drum 3. Fluid-admitting devices (not shown) usually associated with drum 3 supply air or other fluid under pressure to the inside of each bladder 1 to cause inflation of the latter starting from a rest or deflated condition shown in solid line, to a work condition shown in chain line. In the rest condition, bladder 1 is substantially flattened against drum 3 to provide a cylindrical support surface for the respective sidewall 7 and/or the end flap 5a of the carcass ply 5. In the work condition, bladder 1 on the contrary, takes a substantially toroidal conformation to cause turning up of the end flap 5a around the respective annular anchoring structure 6, and/or application of the sidewall 7 against the side surface of the carcass ply 5, after the latter has been shaped into a toroidal configuration.

In the example shown in Fig. 1 the manufacturing apparatus 1 is particularly adapted to the manufacture of tyres the profile of which has a high curvature as in the case of tyres for two-wheeled vehicles and is provided, in addition to or in place of the above described bladders with reference to the building or the shaping drum 3, with a second pair of expandable bladders 1 carried by the annular transfer device 30, each of them being close to one of the axially opposite edges of the device itself. In the rest condition, each of the bladders 1 is flattened against an inner cylindrical surface of the annular transfer device 10, as shown in chain line, whereas in the work condition each bladder is radially expanded towards the inside of the device itself, taking a substantially toroidal conformation. In the work condition each bladder 1 acts close to the axially opposite edges of the belt structure 28 and the possible tread band 29, so as to cause application of the latter against the carcass structure 4 already having a toroidal conformation, to enable coupling with the belt structure itself.

When manufacture has been completed, the tyre is usually submitted to a moulding and vulcanisation step.

Each expandable bladder 1 is advantageously made up of at least one first layer 8 of a first elastomer material, and one second layer 9 of a second elastomer material different from the first elastomer material and placed at a radially external position with respect to the first layer 8. The first and second layers 8, 9 are advantageously coupled at an undulated interface profile 10 defining mechanical-engagement elements 10a between the first and second layers 8, 9.

In a preferential embodiment, the first elastomer material forming layer 8 placed at a radially internal position consists of a natural or synthetic rubber-based blend (a butyl-based blend, for example) or mixtures thereof, so as to surely give the expandable bladder 1 good features of duration, resistance to stresses and reduced manufacturing costs.

The second elastomer material forming the second layer 9 in turn preferably consists of a silicone-based blend or a blend of other material that is little compatible with the blends used for tyre manufacture, so as to promote release of bladder 1 from the sidewall 7 or other structural tyre component submitted to the action of the bladder itself, when the latter is brought from the operating condition back to the rest condition.

As shown in Fig. 1, the first layer 8 can advantageously extend over the whole extension of the respective bladder 1, whereas the second layer 9 preferably extends following a surface portion of the first layer 8, located in the vicinity of one of the circumferential edges of the bladder itself, limitedly to the areas designed to get into contact with the sidewalls 7 or other tyre components.

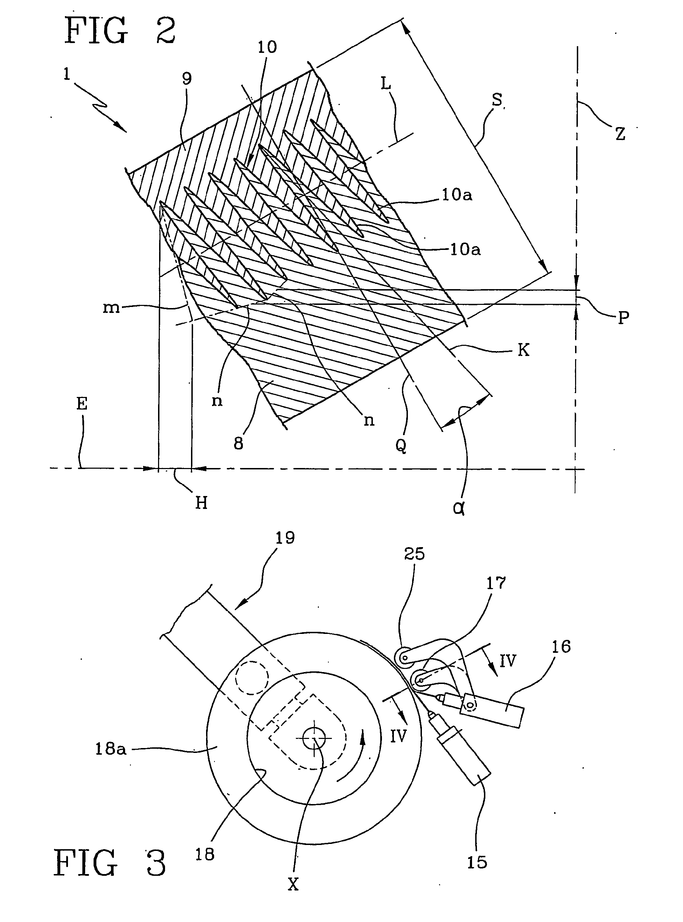

As shown in Fig. 2, a wave pitch P and a wave height H can be identified in the undulated interface profile 10. In the present specification and in the following claims by wave "pitch" of the interface profile it is intended the distance P measured in an axial direction in right section between the median points of two consecutive waves. In the context of the present definition, the median point of each wave is the mean point of segment "n" joining the opposite radially inner ends of said wave. In Fig. 2 the line Z on which value P is indicated is parallel to the geometric axis of bladder 1 and therefore represents the axial direction. The radial direction E is indicated herein and in the following of the specification and the appended claims, at right angles to line Z.

Finally, in the present description and in the following claims by "height" of each wave of said interface profile it is intended projection H on a plane parallel to the equatorial plane of bladder 1 (that in the example shown is coincident with the radial direction E), of a segment "m" extending in a right-section plane perpendicularly to segment "n" joining said radially inner wave ends, or to the extension of the segment itself, between said segment or the segment extension and the radially outermost point of the wave.

To enable an efficient mechanical engagement between layers 8 and 9, the wave height H is preferably equal to or higher than one tenth of, and preferably higher than half the wave pitch P, so as to obtain effective mechanical-engagement elements 10a also in the absence of undercuts.

In the embodiment shown in Fig. 2, the wave height H is as high as about two times the value of the wave pitch P.

In addition and advantageously, the waves defining the undulated profile 10 may be provided to have an extension, identified by the bisecting line K of the vertex of each wave, inclined to a direction Q normal to a median line L of the extension of the undulated profile itself, even to a greater extent than shown in Fig. 2. More specifically, in accordance with a preferred embodiment, to provide a particular mechanical engagement, the inclination angle α included between said bisecting line K and the perpendicular Q to the median line L is included between about 45° and about 88°, and more preferably between about 60° and about 85°.

A suitable value of the inclination angle α, among other things, allows an efficient coupling between the first and second layers to be ensured even when the layered component of which they are part is very restricted.

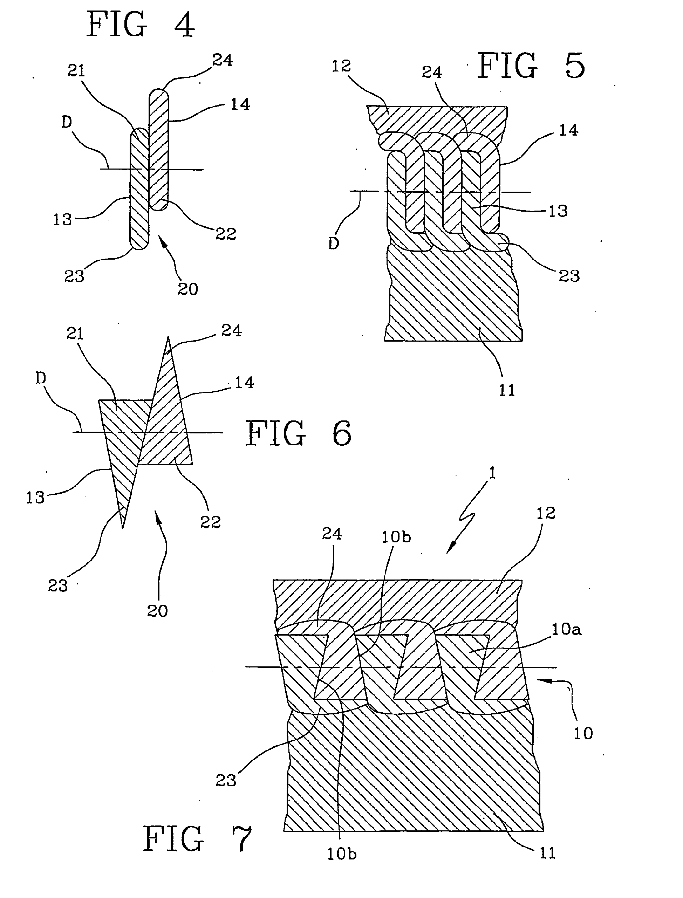

In addition or as an alternative to the above description, the complementary mechanical-engagement elements 10a defined by the interface profile 10 may be provided to have portions 10b of mutual undercut constraint, as shown in Fig. 7.

As viewed from Figs. 5 and 7, a third layer of elastomer material 11 may be further provided, said layer being disposed at a radially internal position to the first layer 8 and being co-crosslinked with the elastomer material forming the first layer.

If required, a fourth layer of elastomer material 12 may be also arranged at a position radially external to the second layer 9, said fourth layer being cross-linked with the elastomer material belonging to at least the second layer itself.

In a preferential technical solution, the bladder has an overall thickness S included, by way of indication, between 1 and 8 mm, equal to about 2 mm for example. The radially internal portion of bladder 1 formed of the first layer 8 and the possible third layer 11 preferably has a thickness, measured with reference to said median line L of the undulated interface profile 10, greater than 1/2, and preferably corresponding to at least 3/5, of the overall thickness S of the bladder.

The thickness of the radially external portion of bladder 1, made up of the second layer 9 and the fourth layer 12, if any, will be advantageously reduced to no more than half the overall thickness S, to the benefit of the bladder manufacturing costs, since the blend of natural or synthetic rubber or blends thereof is less expensive than the silicone-based blend and is also more durable due to its greater mechanical strength.

Manufacture of the expandable bladder 1 described above contemplates preparation of a first elongated element 13 and a second elongated element 14 made of the first and second raw elastomer materials, respectively. The first and second elongated elements, obtained by extrusion and fed from a first 15 and a second 16 extruder respectively, are guided to at least one roller 17 or other feeding member that lay them down on a deposition surface 18a of a forming support 18 of a cylindrical shape or other suitable shape depending on the geometrical features of the expandable bladder to be obtained. The forming support 18 is preferably supported by a robotized arm 19 only partly shown as it is already known from document WO 00/35666 A1 in the name of the same Applicant. The robotized arm 19 gives the forming support 18 a circumferential-distribution rotatory motion around the geometric rotation axis X thereof, by effect of which a circumferential distribution of the elongated elements 13, 14 laid by the feeding roller 17 on the deposition surface 18a is caused.

Simultaneously, the robotized arm 19 moves the forming support 18 in front of the feeding roller 17 through controlled relative displacements of transverse distribution, so that the first and second elongated elements 13, 14 laid on the deposition surface 18a are formed into coils wound around the geometric axis X of the forming support 18.

On coming out of the respective extruders 15, 16, the first and second elongated elements 13, 14 are guided in mutually converging directions towards a point of mutual coupling in which the elongated elements themselves meet and adhere to each other forming a continuous strip-like element 20 that is laid and distributed on the forming support 18 as above described.

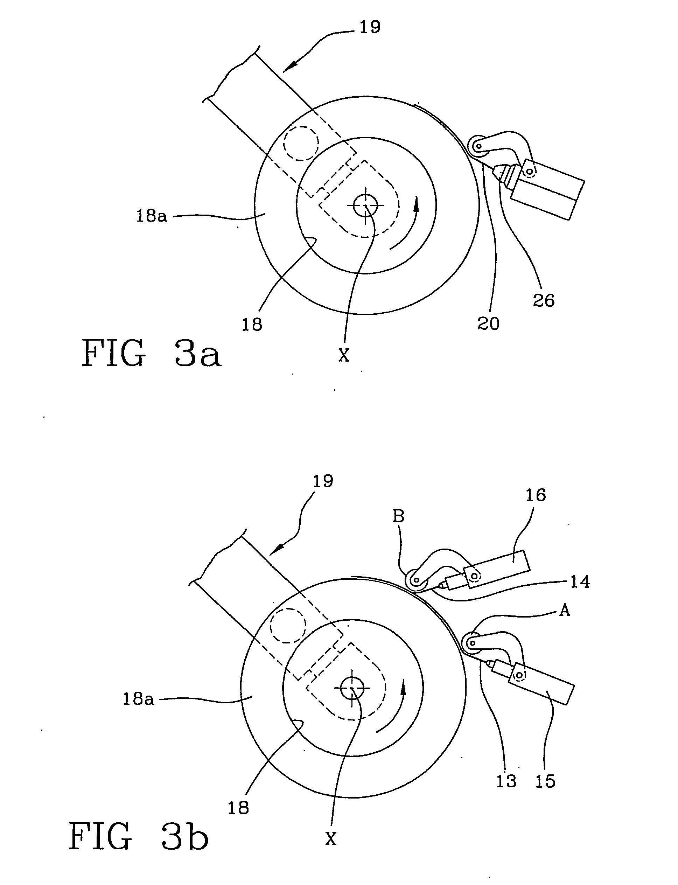

In the example in Fig. 3, the coupling point of the elongated elements 13, 14 is coincident with the application of same to the forming support 18 by the feeding roller 17. However said elongated elements 13, 14 can be also guided in such a manner as to cause coupling of the latter at a point upstream of the forming support 18. It may be also provided that the continuous strip-like element 20 should come from a supply reel, used in a storage step of the strip-like element itself after carrying out mutual coupling of the elongated elements 13, 14.

In a further alternative embodiment, the elongated elements 13, 14 can be co-extruded and directly coupled in the extrusion head of a single extruder 26 (Fig. 3a) so that the strip-like element 20 is directly generated at the extruder exit.

Finally, in a different embodiment shown by way of example in Fig. 3b, the elongated elements 13, 14 can be simultaneously laid on the forming support 18 at points A, B that are mutually spaced apart in a circumferential direction. In this instance, the coupling point between the elongated elements is coincident with the application point of the second elongated element 14 onto the forming support 18.

As can be viewed from Figs. 4 and 6, the elongated elements 13, 14 are mutually coupled in such a manner that, when coupling has occurred, each of them has a base portion 21, 22 in contact with the base portion of the other elongated element. In addition, at least one of the elongated elements 13, 14 may have an apex 23, 24 projecting from the base portion 21, 22, in a direction transverse to the direction of mutual alignment of the base portions themselves, denoted at D in said figures.

In more detail, in a preferential embodiment the elongated elements 13, 14 that can have a conformation substantially identical with each other, are coupled at mutually offset positions in a plane transverse to the mutual alignment direction D of the base portions 21, 22, so that each of them has a respective apex 23, 24 projecting in the opposite direction with respect to the apex of the other elongated element.

During laying on the forming support 18, mutual positioning of the elongated elements 13, 14 and/or orientation of the continuous strip-like element 20 formed by them is controlled in such a manner that, on coming close to the deposition surface 18a, the apex 23 of the first elongated element 13 is turned towards the forming support 18.

As can be clearly seen looking at Figs. 5 and 7, apex 23 of the first elongated element 13 of butyl material, during application is deformed and it consequently bends towards the base portion 22 of the second elongated element 14, taking an interposed position between the second elongated element 14 and the forming support 18 so as to avoid a direct contact of the second elastomer material against the deposition surface 18a. At the deposition surface 18a, the coils disposed consecutively in side by side relationship and formed by the first elongated element 13, by effect of bending of apex 23 as above described, give rise to a continuous layer of butyl material extending over the whole deposition surface 18a.

Apex 24 of the second elongated element 14, in turn, is oriented radially away from the deposition surface 18a exhibited by the forming support 18 and can be turned up against the base portion 21 of the first elongated element 13, so that the coils in side by side relationship formed by the second elongated element 14 cause formation of a continuous layer of silicone material.

If required, turning up of apex 24 of the second elongated element 14 can be assisted by a roller or other auxiliary applicator member 25, operating downstream of the feeding roller 17.

Following deposition in the form of coils in side by side relationship, in addition, the base portions 21, 22 of the first and second elongated elements 13, 14 generate the interface profile 10 between the first and second layers.

If required, application of the first and second elongated elements 13, 14 can be preceded by application of the third layer 11 of a blend consisting of natural or synthetic rubber or a mixture thereof, in any case susceptible of cross-linking with the first elastomer material forming the first elongated element 13. Formation of this third layer can take place in the same manner as previously described with reference to laying of the continuous strip-like element 20, i.e. through application of a continuous elongated element of elastomer material, coming from an extruder for example and formed into coils disposed consecutively in side by side relationship to cover the deposition surface 18a of the forming support 18.

Subsequently to laying of the first and second elongated elements 13, 14, application of the above mentioned fourth layer 12 may be also carried out, said layer being made of a silicone material or at all events a material suitable for cross-linking with the second elastomer material forming the second elongated element 14. Formation of the fourth layer 12 too can be carried out by applying onto the forming support 18, a fourth elongated element of elastomer material coming from an extruder and formed into coils disposed consecutively in side by side relationship. The third and fourth elongated elements 11, 12 can be advantageously produced either by the same extruders 15, 16 used for formation of the first and second elongated elements 13, 14, or by specific extruders dedicated thereto.

In the presence of the third and/or fourth elastomer layers 11, 12, arrangement of apices 23, 24 projecting from the first and second elongated elements 13, 14 respectively may appear to be superfluous, as said third and fourth layers can be cross-linked with the material forming the base portions 21, 22 of the elongated elements 13, 14, respectively.

As shown in Fig. 5, the elongated elements 13, 14 can have a conformation with a substantially flattened cross-section. In this case an interface profile 10 as shown in Fig. 2 is preferably obtained, in which the wave height H is greatly higher than the wave pitch, so that the hills and valleys of the undulated profile will cause formation of the mechanical-engagement elements. Alternatively, as exemplified in Figs. 6 and 7, the elongated elements 13, 14 can advantageously have a cross-section profile of triangular conformation. In this case the base portions 21, 22 of the coupled elongated elements 13, 14 give rise to formation of portions 10b with an undercut constraint, in the mechanical-engagement elements 10a. The same effect is achieved using elongated elements 13, 14 having a trapezoidal cross-section profile.

When formation of layers 8, 9, 11, 12 on the forming support 18 has been completed, the expandable bladder 1 lends itself to be introduced into a mould to be submitted to a moulding and vulcanisation step that can be carried out in any convenient manner. During this step, in the same mould as used for moulding and vulcanisation of the bladder it is possible to inject elastomer material for causing formation of said third and/or fourth layers 11, 12 and/or of any other additional coating layer.

The present invention achieves important advantages.

In fact, any problem resulting from the difficulty of joining a silicone blend to a natural or synthetic rubber-based blend or a mixture thereof in a steady and reliable manner can be brilliantly overcome so as to manufacture a very durable and reliable expandable bladder that eliminates the necessity to carry out surface treatments in order to promote release or separation of said bladder from the tyre components.

In addition, the bladder in reference lends itself to be made in a simple and cheap manner, utilising machinery and equipment already provided in modern tyre-production cycles in which the elastomer components are obtained by winding up elongated elements of raw elastomer material in the form of coils disposed in side by side relationship on a forming support, as described in document WO 00/35666 A1 in the name of the same Applicant.

## Claims

1. An expandable bladder for tyre manufacturing apparatuses, comprising:
- at least one first layer (8) of a first elastomer material,
- and a second layer (9) of a second elastomer material different from said first elastomer material;
- wherein said second layer (9) is at a position radially external to said first layer (8), the bladder being **characterized in that** :
- said first and second layers (8, 9) have an undulated interface profile (10) and
- said interface profile (10) defines mechanical-engagement elements (10a) between the first and second elastomer materials.

2. A bladder as claimed in claim 1, having a toroidal conformation.

3. A bladder as claimed in claim 1 or 2, having at least one circumferential edge carrying at least one circumferential anchoring tailpiece (1a).

4. A bladder as claimed in claim 1 or 2, wherein the interface profile (10) has a wave height (H) and a wave pitch (P), wherein the wave height (H) is higher than or as high as one tenth of the wave pitch (P).

5. A bladder as claimed in claim 4, wherein the wave height (H) is higher than half the wave pitch (P).

6. A bladder as claimed in claim 1 or 2, wherein the undulated profile (10) has a plurality of waves with an inclined extension relative to a direction (Q) normal to a median extension line (L) of the undulated profile itself.

7. A bladder as claimed in claim 6, wherein each wave has an inclination angle (α) between a bisecting line (K) of a vertex of said wave and said direction (Q) normal to the median line (L), included between about 45°and about 88°.

8. A bladder as claimed in claim 7, wherein said inclination angle (α) is included between about 60° and about 85°.

9. A bladder as claimed in claim 1 or 2, wherein said mechanical-engagement elements (10a) have portions (10b) of mutual undercut constraint.

10. A bladder as claimed in claim 1 or 2, wherein at a position radially internal to said first layer (8), a third layer (11) of elastomer material cross-linked with at least said first elastomer material is disposed.

11. A bladder as claimed in claim 1 or 2, wherein at a position radially external to said second layer (9), a fourth layer (12) of elastomer material cross-linked with at least one of said first and second elastomer materials is disposed.

12. A bladder as claimed in claim 1 or 2, wherein said second layer (9) extends along at least one surface portion of the first layer (8).

13. A bladder as claimed in claim 12, wherein said at least one surface portion of the first layer (8) is close to a circumferential edge of the bladder (1).

14. A method of manufacturing an expandable bladder for tyre manufacturing apparatuses, comprising the steps of:
- preparing at least one first elongated element (13) including a first raw elastomer material and at least one second elongated element (14) including a second raw elastomer material having a different composition from that of the first elastomer material;
- laying said first elongated element (13) on a forming support (18), in the form of coils wound up around a geometric axis (X) of said forming support (18) so as to form a first layer (8) of said first elastomer material;
- laying said second elongated element (14) on the forming support (18), in the form of coils wound up around the geometric axis (X) of said forming support (18) so as to form a second layer (9) of said second elastomer material at a radially external position to said first layer (8);
- said first and second layers (8, 9) having an undulated interface profile (10), wherein said interface profile (10) defines mechanical-engagement elements (10a) between the first and second elastomer materials;
- curing said bladder.

15. A method as claimed in claim 14, wherein said interface profile (10) has a wave height (H) and a wave pitch (P) in which the wave height (H) is at least as high as one tenth of the wave pitch (P).

16. A method as claimed in claim 15, wherein the wave height (H) is higher than half the wave pitch (P).

17. A method as claimed in claim 15, wherein the undulated profile (10) has a plurality of waves with an inclined extension relative to a direction (Q) normal to a median extension line (L) of the undulated profile itself.

18. A method as claimed in claim 17, wherein each wave has an inclination angle (α) between a bisecting line (K) of a vertex of said wave and a direction (Q) normal to the median line (L), included between about 45° and about 88°.

19. A bladder as claimed in claim 18, wherein said inclination angle (α) is included between about 60° and about 85°.

20. A method as claimed in claim 14, wherein said mechanical-engagement elements (10) have portions (10b) of mutual undercut constraint.

21. A method as claimed in claim 14, wherein at least one of said first and second elongated elements (13, 14) has a flattened cross-section conformation.

22. A method as claimed in claim 14, wherein at least one of said first and second elongated elements (13, 14) has a substantially triangular cross-section conformation.

23. A method as claimed in claim 14, wherein at least one of said first and second elongated elements (13, 14) has a substantially trapezoidal cross-section conformation.

24. A method as claimed in claim 14, further comprising a step of mutually coupling the first and second elongated elements (13, 14) in the longitudinal extension of same for preparing a continuous strip-like element (20) that is wound around the geometric axis (X) of said forming support (18) during the laying step.

25. A method as claimed in claim 24, wherein the coupling step is carried out before the laying steps.

26. A method as claimed in claim 24, wherein preparation of the continuous strip-like element (20) comprises the steps of:
- feeding the first elongated element (13) through a first feeding member (15);
- feeding the second elongated element (14) through a second feeding member (16) simultaneously with feeding of the first elongated element (13);
- guiding the first and second elongated elements (13, 14) in converging direction with respect to each other, towards a point of mutual coupling.

27. A method as claimed in claim 26, wherein feeding of the first and second elongated elements (13, 14) takes place by extrusion through a first and a second extruders (15, 16) respectively, which are part of said first and second feeding members.

28. A method as claimed in claim 24, wherein the continuous strip-like element (20) is made by co-extrusion of the first and second elongated elements (13, 14) through the same extruder (26).

29. A method as claimed in claim 24, wherein the coupling step is carried out simultaneously with winding of the strip-like element (20) on the forming support (18), at a point of mutual coupling between the elongated elements (13, 14) located on the forming support (18).

30. A method as claimed in claim 24, wherein the coupling step is carried out simultaneously with winding of the strip-like element (20) on the forming support (18), at a point of mutual coupling between the elongated elements (13, 14), located upstream of the forming support (18).

31. A method as claimed in claim 14, wherein the first and second elongated elements (13, 14) are simultaneously laid on the forming support (18) at points (A, B) mutually spaced apart in a circumferential direction.

32. A method as claimed in claim 24, wherein following the coupling step, each of said elongated elements (13, 14) has a base portion (21, 22) integral with a base portion of the other elongated element, and at least one of said elongated elements (13, 14) has an apex (23, 24) transversely projecting from the base portion (21, 22) with respect to a mutual-alignment direction (D) of the base portions (21, 22).

33. A method as claimed in claim 32, wherein the first and second elongated elements (13, 14) are coupled at mutually offset positions transversely of a direction (D) of mutual alignment of the base portions (21, 22), so that each elongated element (13, 14) has said apex (23, 24) projecting in the opposite direction with respect to the apex of the other elongated element.

34. A method as claimed in claim 32 or 33, wherein the apex (23, 24) of an elongated element (13, 14) is turned up against a base portion (21, 22) of the other elongated element.

35. A method as claimed in claim 14, wherein laying of each of said first and second elongated elements (13, 14) comprises the steps of:
- feeding the elongated element (13, 14) from a feeding member (15, 16, 17) disposed close to the forming support (18) to apply said elongated element (13, 14) onto the support itself;
- giving the forming support (18) a rotatory motion for circumferential distribution around the geometric rotation axis (X), so that the elongated element (13, 14) is circumferentially distributed on the forming support (18);
- carrying out controlled relative transverse-distribution displacements between the forming support (18) and the feeding member (15, 16, 17) to form said coils.

36. A method as claimed in claim 14, further comprising the step of applying at least one third layer (11), radially internal to said first layer (8), onto the forming support (18), which third layer (11) is of an elastomer material cross-linkable with said first elastomer material.

37. A method as claimed in claim 14, further comprising the step of applying a fourth layer (12) to said second layer (9) at a radially external position, said fourth layer (12) being of an elastomer material cross-linkable with at least said second elastomer material.

38. A method as claimed in claim 14, wherein during the bladder (1)-curing step at least one step of injecting elastomer material into said mould is carried out, to form at least one additional coating layer on the bladder (1).

39. A process for manufacturing tyres comprising the steps of:
- forming on a drum (3), a carcass structure (4) comprising at least one carcass ply (5) having opposite end flaps (5a) in engagement with respective annular reinforcing structures (6);
- inflating at least one expandable bladder (1) in the vicinity of each of said annular reinforcing structures (6);
- shaping the carcass structure (4) into a toroidal conformation to apply an annular belt structure (28) and a tread band (29) to the carcass ply (5);
- curing the tyre;
wherein each of said expandable bladders (1) comprises:
- at least one first layer (8) of a first elastomer material and one second layer (9) of a second elastomer material different from said first elastomer material;
- wherein said second layer (9) is at a radially external position to said first layer (8);
- wherein said first and second layers (8, 9) have an undulated interface profile (10);
- wherein said interface profile (10) defines mechanical-engagement elements (10a) between the first and second elastomer materials.

40. A process for manufacturing tyres as claimed in claim 39, wherein associated with the carcass structure (4) are sidewalls (7) extending each away from one of the annular reinforcing structures (6), wherein the step of inflating said expandable bladders (1) is at least partly carried out after the shaping step for applying each sidewall against the carcass ply.

41. A process as claimed in claim 39, comprising the step of:
- inflating at least one expandable bladder (1) in the vicinity of each of the axially opposite edges of said annular belt structure (28) to apply them against the carcass ply (5).

42. A process of manufacturing tyres as claimed in one or more of claims 39 to 41, wherein each of said expandable bladders (1) is defined as claimed in anyone of claims 2 to 13.

43. A manufacturing apparatus for tyres of vehicle wheels, comprising:
- devices designed to form a carcass structure (4) on a drum (3), which carcass structure comprises at least one carcass ply (5) having opposite end flaps (5a) in engagement with respective annular reinforcing structures (6);
- at least one pair of expandable bladders (1) operatively associated with said drum (3), each of said expandable bladders (1) being inflatable in the vicinity of one of said annular reinforcing structures (6) ;
- devices (30) for positioning a belt structure (28) around said carcass structure (4);
- devices to shape the carcass structure (4) into a toroidal conformation for applying an annular belt structure (28) to the carcass ply (5);
wherein each of said expandable bladders (1) comprises:
- at least one first layer (8) of a first elastomer material and one second layer (9) of a second elastomer material different from said first elastomer material;
- wherein said second layer (9) is at a position radially external to said first layer (8);
- wherein said first and second layers (8, 9) have an undulated interface profile (10);
- wherein said interface profile (10) defines mechanical-engagement elements (10a) between the first and second elastomer materials.

44. An apparatus as claimed in claim 43, wherein said devices designed to form the carcass structure comprises members for applying a pair of sidewalls (7) extending each on one of said expandable bladders in a deflated condition, so that said sidewalls (7) are applied against the carcass ply (5) following inflation of said expandable bladders (1).

45. An apparatus as claimed in claim 43, comprising:
- at least one pair of expandable bladders (1) operatively associated with said positioning devices (30) of the belt structure (28), each of said expandable bladders (1) being inflatable in the vicinity of one of the axially opposite edges of the belt structure (28) to cause application of the latter against the carcass ply (5) shaped into a toroidal conformation.

46. An apparatus as claimed in claim 43, wherein said drum (3) is a building drum.

47. An apparatus as claimed in claim 43 or 46, wherein said drum (3) is a shaping drum.

48. A manufacturing apparatus for tyres of vehicle wheels as claimed in one or more of claims 43 to 47, wherein said expandable bladder (1) is defined as claimed in anyone of claims 2 to 13.

## Patentansprüche

1. Expandierbarer Balg für Reifenherstellungsvorrichtungen
- mit wenigstens einer ersten Schicht (8) aus einem ersten elastomeren Material und
- mit einer zweiten Schicht (9) aus einem zweiten elastomeren Material, das sich von dem ersten elastomeren Material unterscheidet,
- wobei die zweite Schicht (9) sich in einer zu der ersten Schicht (8) radial äußeren Position befindet, und
wobei der Balg **dadurch gekennzeichnet ist,**
- **dass** die erste und die zweite Schicht (8, 9) ein gewelltes Berührungsflächenprofil (10) haben und
- **dass** das Berührungsflächenprofil (10) Elemente (10a) für den mechanischen Eingriff zwischen dem ersten und zweiten elastomeren Material bildet.

2. Balg nach Anspruch 1 mit einer Torusform.

3. Balg nach Anspruch 1 oder 2 mit wenigstens einem Umfangsrand, der wenigstens ein am Umfang angeordnetes verankerndes Endstück (1a) trägt.

4. Balg nach Anspruch 1 oder 2, bei welchem das Berührungsflächenprofil (10) eine Wellenhöhe (H) und eine Wellenteilung (P) hat, wobei die Wellenhöhe (H) genauso groß ist wie oder größer ist als ein Zehntel der Wellenteilung (P).

5. Balg nach Anspruch 4, bei welchem die Wellenhöhe (H) größer als die Hälfte der Wellenteilung (P) ist.

6. Balg nach Anspruch 1 oder 2, bei welchem das gewellte Profil (10) eine Vielzahl von Wellen mit einer geneigten Erstreckung bezüglich einer Richtung (Q) senkrecht zu einer Mittellinie (L) der Erstreckung des gewellten Profils hat.

7. Balg nach Anspruch 6, bei welchem jede Welle einen Neigungswinkel (α) zwischen einer Winkelhalbierenden (K) eines Wellenscheitels und zwischen der zur Mittellinie (L) senkrechten Richtung (Q) hat, der zwischen etwa 45° und etwa 88° liegt.

8. Balg nach Anspruch 7, bei welchem der Neigungswinkel (α) zwischen etwa 60° und etwa 85° liegt.

9. Balg nach Anspruch 1 oder 2, bei welchem die Elemente (10a) für den mechanischen Eingriff Abschnitte (10b) mit gegenseitiger Hinterschneidungshemmung haben.

10. Balg nach Anspruch 1 oder 2, bei welchem in einer zu der ersten Schicht (8) radial inneren Position eine dritte Schicht aus einem elastomeren Material angeordnet ist, die wenigstens mit dem ersten elastomeren Material vernetzt ist.

11. Balg nach Anspruch 1 oder 2, bei welchem in einer zu der zweiten Schicht (9) radial äußeren Position eine vierte Schicht (12) aus elastomerem Material angeordnet ist, die mit dem ersten oder zweiten oder beiden elastomeren Materialien vemetzt ist.

12. Balg nach Anspruch 1 oder 2, bei welchem sich die zweite Schicht (90) längs wenigstens eines Oberflächenabschnitts der ersten Schicht (8) erstreckt.

13. Balg nach Anspruch 12, bei welchem sich der wenigstens eine Oberflächenabschnitt der ersten Schicht (8) nahe am Umfangsrand des Balgs (1) befindet.

14. Verfahren zur Herstellung eines expandierbaren Balgs für Reifenherstellungsvorrichtungen, wobei bei dem Verfahren
- wenigstens ein erstes langgestrecktes Element (13), das ein erstes elastomeres Rohmaterial aufweist, und wenigstens ein zweites langgestrecktes Element (14) vorbereitet werden, das ein zweites elastomeres Rohmaterial aufweist, dessen Zusammensetzung sich von der des ersten elastomeren Materials unterscheidet,
- das erste langgestreckte Element (13) auf einen formenden Träger (18) in Form von Windungen gelegt wird, die um eine geometrische Achse (X) des formenden Trägers (18) so gewickelt werden, dass eine erste Schicht (8) des ersten elastomeren Materials gebildet wird,
- das zweite langgestreckte Element (14) auf den formenden Träger (18) in Form von Windungen gelegt wird, die um die geometrische Achse des formenden Trägers (18) so gewickelt werden, dass eine zweite Schicht (9) des zweiten elastomeren Materials an einer zur ersten Schicht (8) radial äußeren Position gebildet wird,
- wobei die erste und die zweite Schicht (8, 9) ein gewelltes Berührungsflächenprofil (18) haben, das Elemente (10a) für einen mechanischen Eingriff zwischen dem ersten und zweiten elastomeren Material bildet, und
- der Balg vulkanisiert wird.

15. Verfahren nach Anspruch 14, bei welchem das Berührungsflächenprofil (10) eine Wellenhöhe (H) und eine Wellenteilung (P) hat, wobei die Wellenhöhe (H) wenigstens so groß ist wie ein Zehntel der Wellenteilung (P).

16. Verfahren nach Anspruch 15, bei welchem die Wellenhöhe (H) größer als die Hälfte der Wellenteilung (P) ist.

17. Verfahren nach Anspruch 15, bei welchem das gewellte Profil (10) eine Vielzahl von Wellen mit einer geneigten Erstreckung bezüglich einer Richtung (Q) senkrecht zu einer Mittellinie (L) der Erstreckung des gewellten Profils hat.

18. Verfahren nach Anspruch 17, bei welchem jede Welle einen Neigungswinkel (α) zwischen einer Winkelhalbierenden (K) eines Wellenscheitels und zwischen einer zur Mittellinie (L) senkrechten Richtung (Q) hat, der zwischen etwa 45° und etwa 88° liegt.

19. Verfahren nach Anspruch 18, bei welchem der Neigungswinkel (α) zwischen etwa 60° und etwa 85° liegt.

20. Verfahren nach Anspruch 14, bei welchem die Elemente (10) für den mechanischen Eingriff Abschnitte (10b) mit gegenseitiger Hinterschneidungshemmung haben.

21. Verfahren nach Anspruch 14, bei welchem das erste oder das zweite langgestreckte Element (13, 14) oder beide eine abgeflachte Querschnittsform haben.

22. Verfahren nach Anspruch 14, bei welchem das erste oder das zweite langgestreckte Element (13, 14) oder beide eine im Wesentlichen dreieckige Querschnittsform haben.

23. Verfahren nach Anspruch 14, bei welchem das erste oder das zweite langgestreckte Element (13, 14) oder beide eine im Wesentlichen trapezförmige Querschnittsform haben.

24. Verfahren nach Anspruch 14, welches den weiteren Schritt aufweist, das erste und das zweite langgestreckte Element (13, 14) in ihrer Längserstreckung zur Vorbereitung eines fortlaufenden bandförmigen Elements (20) miteinander zu verbinden, das um die geometrische Achse (X) des formenden Trägers (18) während des Legeschritts gewickelt wird.

25. Verfahren nach Anspruch 24, bei welchem der Verbindungsschritt vor den Legeschritten ausgeführt wird.

26. Verfahren nach Anspruch 24, bei welchem die Vorbereitung des fortlaufenden streifenförmigen Elements (20) die Schritte aufweist:
- das erste langgestreckte Element (13) durch ein erstes Zuführelement (15) zuzuführen,
- das zweite langgestreckte Element (14) durch ein zweites Zuführelement (16) gleichzeitig mit der Zuführung des ersten langgestreckten Elements (13) zuzuführen und
- das erste und das zweite langgestreckte Element (13, 14) in konvergierender Richtung bezüglich einander zu einem Punkt der gegenseitigen Verbindung zu führen.

27. Verfahren nach Anspruch 26, bei welchem das Zuführen des ersten und zweiten langgestreckten Elements (13, 14) durch Extrusion durch einen ersten bzw. zweiten Extruder (15, 16) erfolgt, die Teil des ersten bzw. zweiten Zuführelements sind.

28. Verfahren nach Anspruch 24, bei welchem das fortlaufende streifenförmige Element (20) durch Koextrusion des ersten und zweiten langgestreckten Elements (13, 14) durch den gleichen Extruder (26) hindurch gebildet wird.

29. Verfahren nach Anspruch 24, bei welchem der Verbindungsschritt gleichzeitig mit dem Wickeln des streifenförmigen Elements (20) auf den formenden Träger (18) an einer Stelle der gegenseitigen Verbindung zwischen den langgestreckten Elementen (13, 14) ausgeführt wird, die sich auf dem formenden Träger (18) befindet.

30. Verfahren nach Anspruch 24, bei welchem der Verbindungsschritt gleichzeitig mit dem Wickeln des streifenförmigen Elements (20) auf den formenden Träger (18) an einer Stelle der gegenseitigen Verbindung zwischen den langgestreckten Elementen (13, 14) ausgeführt wird, die sich stromauf von dem formenden Träger (18) befindet.

31. Verfahren nach Anspruch 14, bei welchem das erste und das zweite langgestreckte Element (13, 14) gleichzeitig auf den formenden Träger (18) an Stellen (A, B) gelegt werden, die in Umfangsrichtung zueinander beabstandet sind.

32. Verfahren nach Anspruch 24, bei welchem nach dem Verbindungsschritt jedes der langgestreckten Elemente (13, 14) einen Basisabschnitt (21, 22) hat, der ein Stück mit dem Basisabschnitt des anderen langgestreckten Elements bildet, und wenigstens eines der langgestreckten Elemente (13, 14) einen Scheitel (23, 24) hat, der aus dem Basisabschnitt (21, 22) quer bezüglich einer gegenseitigen Ausrichtrichtung (D) der Basisabschnitte (21, 22) vorsteht.

33. Verfahren nach Anspruch 32, bei welchem das erste und das zweite langgestreckte Element (13, 14) an zueinander quer zu einer Richtung (D) der gegenseitigen Ausrichtung der Basisabschnitte (21, 22) versetzten Positionen so verbunden werden, dass jedes langgestreckte Element (13, 14) mit dem Scheitel (23, 24) in der bezüglich des Scheitels des anderen langgestreckten Elements entgegengesetzten Richtung vorsteht.

34. Verfahren nach Anspruch 32 oder 33, bei welchem der Scheitel (23, 24) eines langgestreckten Elements (13, 14) auf einen Basisabschnitt (21, 22) des anderen langgestreckten Elements umgeschlagen wird.

35. Verfahren nach Anspruch 14, bei welchem das Legen eines jeden der ersten und zweiten langgestreckten Elemente (13, 14) die Schritte aufweist:
- das langgestreckte Element (13, 14) von einem Zuführelement (15, 16, 17) zuzuführen, das nahe an dem formenden Träger (18) angeordnet ist, um das langgestreckte Element (13, 14) auf den Träger aufzubringen,
- dem formenden Träger (18) eine Drehbewegung für eine solche Umfangsverteilung um die geometrische Drehachse (X) zu geben, dass das langgestreckte Element (13, 14) am Umfang auf dem formenden Träger (18) verteilt wird, und
- gesteuerte relative Querverteilungsverschiebungen zwischen dem formenden Träger (18) und dem Zuführelement (15, 16, 17) zur Bildung der Windungen auszuführen.

36. Verfahren nach Anspruch 14, welches weiterhin den Schritt aufweist, wenigstens eine dritte Schicht (11) radial innen zu der ersten Schicht (8) auf den formenden Träger (18) aufzubringen, wobei die dritte Schicht (11) aus einem elastomeren Material besteht, das mit dem ersten elastomeren Material vemetzbar ist.

37. Verfahren nach Anspruch 14, welches weiterhin den Schritt aufweist, eine vierte Schicht (12) auf die zweite Schicht (9) an einer radial äußeren Position aufzubringen, wobei die vierte Schicht (12) aus einem elastomeren Material besteht, das wenigstens mit dem zweiten elastomeren Material vernetzbar ist.

38. Verfahren nach Anspruch 14, bei welchem während des Vulkanisierschritts des Balges (1) wenigstens ein Schritt ausgeführt wird, bei welchem das elastomere Material in die Form eingespritzt wird, um wenigstens eine zusätzliche Überzugsschicht auf dem Balg (1) zu bilden.

39. Verfahren zur Herstellung von Reifen mit den Schritten, bei denen
- auf einer Trommel (3) ein Karkassenaufbau (4) mit wenigstens einer Karkassenlage (5) gebildet wird, die gegenüberliegende Endlaschen (5a) hat, die in Eingriff mit jeweiligen ringförmigen Verstärkungsaufbauten (6) stehen,
- wenigstens ein expandierbarer Balg (1) in der Nähe einer jeden der ringförmigen Verstärkungsaufbauten (6) aufgeblasen wird,
- der Karkassenaufbau (4) in eine Torusform gebracht wird, um einen ringförmigen Gurtaufbau (28) und ein Laufflächenband (29) auf die Karkassenlage (5) aufzubringen, und
- der Reifen vulkanisiert wird, wobei
- jeder der expandierbaren Balge (1) wenigstens eine erste Schicht (8) aus einem ersten elastomeren Material und eine zweite Schicht (9) aus einem zweiten elastomeren Material aufweist, das sich von dem ersten elastomeren Material unterscheidet,
- sich die zweite Schicht (9) an einer radial äußeren Position zu der ersten Schicht (8) befindet,
- die erste und die zweite Schicht (8, 9) ein gewelltes Berührungsflächenprofil (10) haben und
- das Berührungsflächenprofil (10) Elemente (10a) für einen mechanischen Eingriff zwischen dem ersten und zweiten elastomeren Material bildet.

40. Verfahren zur Herstellung von Reifen nach Anspruch 39, bei welchem mit dem Karkassenaufbau (4) Seitenwände (7) verbunden sind, von denen sich jede von einem der ringförmigen Verstärkungsaufbauten (6) weg erstreckt, wobei der Schritt des Aufblasens des expandierbaren Balges (1) wenigstens teilweise nach dem Formungsschritt zum Anbringen jeder Seitenwand an der Karkassenlage ausgeführt wird.

41. Verfahren nach Anspruch 39 mit dem Schritt, wenigstens einen expandierbaren Balg (1) in der Nähe eines jeden der axial gegenüberliegenden Ränder des ringförmigen Gurtaufbaus (28) aufzublasen, um sie an der Karkassenlage (5) anzulegen.

42. Verfahren zur Herstellung von Reifen nach einem oder mehreren der Ansprüche 39 bis 41, bei welchem jeder der expandierbaren Balge (1) nach einem der Ansprüche 2 bis 13 ausgebildet ist.

43. Vorrichtung zur Herstellung von Reifen für Fahrzeugräder, wobei die Vorrichtung
- Einrichtungen, die zur Bildung eines Karkassenaufbaus (4) auf einer Trommel (3) ausgelegt sind, wobei der Karkassenaufbau wenigstens eine Karkassenlage (5) mit gegenüberliegenden Endlaschen (5a) in Eingriff mit jeweiligen ringförmigen Verstärkungsaufbauten (6) aufweist,
- wenigstens ein Paar von expandierbaren Balgen (1),die funktionsmäßig der Trommel (3) zugeordnet sind, wobei jeder der expandierbaren Balge (1) in der Nähe eines der ringförmigen Verstärkungsaufbauten (6) aufblasbar ist,
- Einrichtungen (30) zum Positionieren eines Gurtaufbau (28) um den Karkassenaufbau (4) herum, und
- Einrichtungen zum Bringen des Karkassenaufbaus (4) in eine Torusform aufweist, um einen ringförmigen Gurtaufbau (28) an der Karkassenlage (5) anzubringen, wobei
- jeder der expandierbaren Balge (1) wenigstens eine erste Schicht (8) aus einem ersten elastomeren Material und eine zweite Schicht (9) aus einem zweiten elastomeren Material aufweist, das sich von dem ersten elastomeren Material unterscheidet,
- sich die zweite Schicht (9) an einer radial äußeren Position zu der ersten Schicht (8) befindet,
- die erste und die zweite Schicht (8, 9) ein gewelltes Berührungsflächenprofil (10) haben und
- das Berührungsflächenprofil (10) Elemente (10a) für einen mechanischen Eingriff zwischen dem ersten und zweiten elastomeren Material bildet.

44. Vorrichtung nach Anspruch 43, bei welcher die Einrichtungen, die zur Bildung des Karkassenaufbaus ausgelegt sind, Elemente für ein solches Anlegen eines Paars von Seitenwänden (7), von denen sich jede auf einem der expandierbaren Balge im nicht aufgepumpten Zustand erstreckt, aufweisen, dass die Seitenwände (7) an die Karkassenlage (5) nach dem Aufblasen der expandierbaren Balge (1) angelegt sind.

45. Vorrichtung nach Anspruch 43, welche wenigstens ein Paar von expandierbaren Balgen (1) aufweist, die funktionsmäßig den Positioniereinrichtungen (30) des Gurtaufbaus (28) zugeordnet sind, wobei jeder der expandierbaren Balge (1) in der Nähe eines der axial gegenüberliegenden Ränder des Gurtaufbaus (28) aufblasbar sind, um das Anlegen der Letzteren an der in eine Torusform gebrachten Karkassenlage (5) herbeizuführen.

46. Vorrichtung nach Anspruch 43, bei welcher die Trommel (3) eine Aufbautrommel ist.

47. Vorrichtung nach Anspruch 43 oder 46, bei welcher die Trommel (3) eine Formtrommel ist.

48. Vorrichtung zur Herstellung von Reifen für Fahrzeugräder nach einem der Ansprüche 43 bis 47, bei welcher der expandierbare Balg (1) nach einem Ansprüche 2 bis 13 ausgebildet ist.

## Revendications

1. Enveloppe expansible pour dispositifs de fabrication de pneus, comprenant :
- au moins une première couche (8) d'un premier matériau élastomère,
- et une deuxième couche (9) d'un deuxième matériau élastomère, différent dudit premier matériau élastomère ;
- dans laquelle ladite deuxième couche (9) est à une position radialement externe par rapport à ladite première couche (8), l'enveloppe étant **caractérisée en ce que** :
- lesdites première et deuxième couches (8, 9) ont un profil d'interface ondulé (10) et
- ledit profil d'interface (10) définit des éléments d'accouplement mécanique (10a) entre les premier et deuxième matériaux élastomères.

2. Enveloppe selon la revendication 1, ayant une structure toroïdale.

3. Enveloppe selon la revendication 1 ou 2, ayant au moins un bord périphérique portant au moins un about d'ancrage périphérique (1a).

4. Enveloppe selon la revendication 1 ou 2, dans laquelle le profil d'interface (10) a une hauteur d'onde (H) et un pas d'onde (P), la hauteur d'onde (H) étant supérieure ou égale à un dixième du pas d'onde (P).

5. Enveloppe selon la revendication 4, dans laquelle la hauteur d'onde (H) est supérieure à la moitié du pas d'onde (P).

6. Enveloppe selon la revendication 1 ou 2, dans laquelle le profil ondulé (10) comporte une pluralité d'ondes ayant une extension inclinée par rapport à une direction (Q) normale à une ligne d'extension médiane (L) du profil ondulé.

7. Enveloppe selon la revendication 6, dans laquelle chaque onde a un angle d'inclinaison (α) entre une ligne bissectrice (K) d'un sommet de ladite onde et ladite direction (Q) normale à la ligne médiane (L), compris entre 45° environ et 88° environ.

8. Enveloppe selon la revendication 7, dans laquelle ledit angle d'inclinaison (α) est compris entre 60° environ et 85° environ.

9. Enveloppe selon la revendication 1 ou 2, dans laquelle lesdits éléments d'accouplement mécanique (10a) ont des parties (10b) de contrainte de dégagement mutuel.

10. Enveloppe selon la revendication 1 ou 2, dans laquelle, à une position radialement interne par rapport à ladite première couche (8), est disposée une troisième couche (11) en matériau élastomère réticulé avec au moins ledit premier matériau élastomère.

11. Enveloppe selon la revendication 1 ou 2, dans laquelle, à une position radialement externe par rapport à ladite deuxième couche (9), est disposée une quatrième couche (12) en matériau élastomère réticulé avec au moins l'un desdits premier et deuxième matériaux élastomères.

12. Enveloppe selon la revendication 1 ou 2, dans laquelle ladite deuxième couche (9) s'étend le long d'au moins une partie de la surface de la première couche (8).

13. Enveloppe selon la revendication 12, dans laquelle ladite au moins une partie de surface de la première couche (8) est proche d'un bord périphérique de l'enveloppe (1).

14. Procédé de fabrication d'une enveloppe expansible pour dispositifs de fabrication de pneus, comprenant les étapes consistant à :
- préparer au moins un premier élément allongé (13) comprenant un premier matériau élastomère brut et au moins un deuxième élément allongé (14) comprenant un deuxième matériau élastomère brut ayant une composition différente de celle du premier matériau élastomère ;
- placer ledit premier élément allongé (13) sur un support de formation (18), sous la forme de spires enroulées autour de l'axe géométrique (X) dudit support de formation (18) afin de former une première couche (8) dudit premier matériau élastomère ;
- placer ledit deuxième élément allongé (14) sur le support de formation (18), sous la forme de spires enroulées autour de l'axe géométrique (X) dudit support de formation (18) afin de former une deuxième couche (9) dudit deuxième matériau élastomère à une position radialement externe par rapport à ladite première couche (8) ;
- lesdites première et deuxième couches (8, 9) ayant un profil d'interface ondulé (10), ledit profil d'interface (10) définissant des éléments d'accouplement mécanique (10a) entre les premier et deuxième matériaux élastomères ;
- faire cuire ladite enveloppe.

15. Procédé selon la revendication 14, dans lequel ledit profil d'interface (10) a une hauteur d'onde (H) et un pas d'onde (P), la hauteur d'onde (H) étant supérieure ou égale à un dixième du pas d'onde (P).

16. Procédé selon la revendication 15, dans lequel la hauteur d'onde (H) est supérieure à la moitié du pas d'onde (P).

17. Procédé selon la revendication 15, dans lequel le profil ondulé (10) comporte une pluralité d'ondes ayant une extension inclinée par rapport à une direction (Q) normale à une ligne d'extension médiane (L) du profil ondulé.

18. Procédé selon la revendication 17, dans lequel chaque onde a un angle d'inclinaison (α) entre une ligne bissectrice (K) d'un sommet de ladite onde et une direction (Q) normale à la ligne médiane (L), compris entre 45° environ et 88° environ.

19. Procédé selon la revendication 18, dans lequel ledit angle d'inclinaison (α) est compris entre 60° environ et 85° environ.

20. Procédé selon la revendication 14, dans lequel lesdits éléments d'accouplement mécanique (10a) ont des parties (10b) de contrainte de dégagement mutuel.

21. Procédé selon la revendication 14, dans lequel au moins l'un desdits premier et deuxième éléments allongés (13, 14) présente une structure à section transversale aplatie.

22. Procédé selon la revendication 14, dans lequel au moins l'un desdits premier et deuxième éléments allongés (13, 14) présente une structure à section transversale substantiellement triangulaire.

23. Procédé selon la revendication 14, dans lequel au moins l'un desdits premier et deuxième éléments allongés (13, 14) présente une structure à section transversale substantiellement trapézoïdale.

24. Procédé selon la revendication 14, comprenant en outre une étape consistant à accoupler mutuellement les premier et deuxième éléments allongés (13, 14) dans leur sens longitudinal pour préparer un élément en bande continu (20) qui est enroulé autour de l'axe géométrique (X) dudit support de formation (18) pendant l'étape de pose.

25. Procédé selon la revendication 24, dans lequel l'étape d'accouplement est exécutée avant les étapes de pose.

26. Procédé selon la revendication 24, dans lequel la préparation de l'élément en bande continu (20) comprend les étapes consistant à :
- amener le premier élément allongé (13) au moyen d'un premier organe d'alimentation (15) ;
- amener le deuxième élément allongé (14) au moyen d'un deuxième organe d'alimentation (16) simultanément au premier élément allongé (13) ;
- guider les premier et deuxième éléments allongés (13, 14) dans une direction convergente l'un par rapport à l'autre, vers un point d'accouplement mutuel.

27. Procédé selon la revendication 26, dans lequel l'alimentation des premier et deuxième éléments allongés (13, 14) se fait par extrusion à l'aide d'une première et d'une deuxième extrudeuse (15, 16), respectivement, qui font partie desdits premier et deuxième organes d'alimentation.

28. Procédé selon la revendication 24, dans lequel l'élément en bande continu (20) est fabriqué par co-extrusion des premier et deuxième éléments allongés (13, 14) à l'aide de la même extrudeuse (26).

29. Procédé selon la revendication 24, dans lequel l'étape d'accouplement est exécutée simultanément avec l'enroulement de l'élément en bande continu (20) sur le support de formation (18), en un point d'accouplement mutuel entre les éléments allongés (13, 14) situés sur le support de formation (18).

30. Procédé selon la revendication 24, dans lequel l'étape d'accouplement est exécutée simultanément avec l'enroulement de l'élément en bande continu (20) sur le support de formation (18), en un point d'accouplement mutuel entre les éléments allongés (13, 14), situé en amont du support de formation (18).

31. Procédé selon la revendication 14, dans lequel les premier et deuxième éléments allongés (13, 14) sont posés simultanément sur le support de formation (18) en des points (A, B) mutuellement espacés dans une direction périphérique.

32. Procédé selon la revendication 24, dans lequel, suite à l'étape d'accouplement, chacun desdits éléments allongés (13, 14) a une partie de base (21, 22) intégrée à une partie de base de l'autre élément allongé, et au moins l'un desdits éléments allongés (13, 14) a un sommet (23, 24) qui fait saillie transversalement depuis la partie de base (21, 22) par rapport à une direction d'alignement mutuel (D) des parties de base (21, 22).

33. Procédé selon la revendication 32, dans lequel les premier et deuxième éléments allongés (13, 14) sont accouplés en des positions mutuellement décalées en travers d'une direction (D) d'alignement mutuel des parties de base (21, 22), de sorte que ledit sommet (23, 24) de chaque élément allongé (13, 14) fait saillie dans le sens opposé par rapport au sommet de l'autre élément allongé.

34. Procédé selon la revendication 32 ou 33, dans lequel le sommet (23, 24) d'un élément allongé (13, 14) est tourné vers le haut contre une partie de base (21, 22) de l'autre élément allongé.

35. Procédé selon la revendication 14, dans lequel la pose de chacun desdits premier et deuxième éléments allongés (13, 14) comprend les étapes consistant à :
- amener l'élément allongé (13, 14) depuis un organe d'alimentation (15, 16, 17) disposé près du support de formation (18) pour appliquer ledit élément allongé (13, 14) sur le support ;
- donner au support de formation (18) un mouvement de rotation pour la répartition périphérique autour de l'axe de rotation géométrique (X), de sorte que l'élément allongé (13, 14) est réparti de façon périphérique sur le support de formation (18) ;
- effectuer des déplacements de répartition transversale relative contrôlés entre le support de formation (18) et l'organe d'alimentation (15, 16, 17) pour former lesdites spires.

36. Procédé selon la revendication 14, comprenant en outre l'étape consistant à appliquer au moins une troisième couche (11), radialement interne par rapport à ladite première couche (8), sur le support de formation (18), ladite troisième couche (11) étant constituée d'un matériau élastomère réticulable avec ledit premier matériau élastomère.

37. Procédé selon la revendication 14, comprenant en outre l'étape consistant à appliquer une quatrième couche (12) sur ladite deuxième couche (9) en une position radialement externe, ladite quatrième couche (12) étant faite d'un matériau élastomère réticulable avec au moins ledit deuxième matériau élastomère.

38. Procédé selon la revendication 14, dans lequel, pendant l'étape de cuisson de l'enveloppe (1), on exécute au moins une étape d'injection d'un matériau élastomère dans ledit moule, pour former au moins une couche de revêtement supplémentaire sur l'enveloppe (1).

39. Processus pour la fabrication de pneus, comprenant les étapes consistant à :
- former sur un tambour (3) une structure de carcasse (4) comprenant au moins une nappe de carcasse (5) ayant des rebords d'extrémité opposés (5a) en prise avec des structures de renforcement annulaires respectives (6) ;
- gonfler au moins une enveloppe expansible (1) au voisinage de chacune desdites structures de renforcement annulaires (6);
- mettre la structure de carcasse (4) sous la forme d'une structure toroïdale pour appliquer une structure de ceinture annulaire (28) et une bande de roulement (29) sur la nappe de carcasse (5) ;
- faire cuire le pneu ;
dans lequel chacune desdites enveloppes expansibles (1) comprend :
- au moins une première couche (8) d'un premier matériau élastomère et une deuxième couche (9) d'un deuxième matériau élastomère, différent dudit premier matériau élastomère ;
- dans laquelle ladite deuxième couche (9) est à une position radialement externe par rapport à ladite première couche (8) ;
- dans laquelle lesdites première et deuxième couches (8, 9) ont un profil d'interface ondulé (10) ; et
- dans laquelle ledit profil d'interface (10) définit des éléments d'accouplement mécanique (10a) entre les premier et deuxième matériaux élastomères.

40. Processus pour la fabrication de pneus selon la revendication 39, dans lequel des flancs (7) associés à la structure de carcasse (4) s'étendent chacun à l'écart de l'une des structures de renforcement annulaires (6), l'étape de gonflage desdites enveloppes expansibles (1) étant au moins partiellement effectuée après l'étape de mise en forme pour appliquer chaque flanc contre la nappe de carcasse.

41. Processus selon la revendication 39, comprenant l'étape consistant à :
- gonfler au moins une enveloppe expansible (1) au voisinage de chacun des bords axialement opposés de ladite structure de ceinture annulaire (28) pour les appliquer contre la nappe de carcasse (5).

42. Processus de fabrication de pneus selon l'une ou plusieurs des revendications 39 à 41, dans lequel chacune desdites enveloppes expansibles (1) est définie selon l'une quelconque des revendications 2 à 13.

43. Dispositif de fabrication pour pneus de roues de véhicules, comprenant :
- des appareils conçus pour former une structure de carcasse (4) sur un tambour (3), laquelle structure de carcasse comprend au moins une nappe de carcasse (5) ayant des rebords d'extrémité opposés (5a) en prise avec des structures de renforcement annulaires respectives (6) ;
- au moins une paire d'enveloppes expansibles (1) associées fonctionnellement audit tambour (3), chacune desdites enveloppes expansibles (1) étant gonflable au voisinage de l'une desdites structures de renforcement annulaires (6) ;
- des appareils (30) pour positionner une structure de ceinture (28) autour de ladite structure de carcasse (4) ;
- des appareils pour mettre la structure de carcasse (4) sous une forme toroïdale pour appliquer une structure de ceinture annulaire (28) à la nappe de carcasse (5) ;
dans lequel chacune desdites enveloppes expansibles (1) comprend :
- au moins une première couche (8) d'un premier matériau élastomère et une deuxième couche (9) d'un deuxième matériau élastomère, différent dudit premier matériau élastomère ;
- dans laquelle ladite deuxième couche (9) est à une position radialement externe par rapport à ladite première couche (8) ;
- dans laquelle lesdites première et deuxième couches (8, 9) ont un profil d'interface ondulé (10) ;
- dans laquelle ledit profil d'interface (10) définit des éléments d'accouplement mécanique (10a) entre les premier et deuxième matériaux élastomères.

44. Dispositif selon la revendication 43, dans lequel lesdits appareils conçus pour former la structure de carcasse comprennent des organes pour appliquer une paire de flancs (7) s'étendant chacun sur l'une desdites enveloppes expansibles dans un état dégonflé, de sorte que lesdits flancs (7) sont appliqués contre la nappe de carcasse (5) suite au gonflage desdites enveloppes expansibles (1).

45. Dispositif selon la revendication 43, comprenant :
- au moins une paire d'enveloppes expansibles (1) associées fonctionnellement auxdits appareils de positionnement (30) de la structure de ceinture (28), chacune desdites enveloppes expansibles (1) étant gonflable au voisinage de l'un des bords axialement opposés de la structure de ceinture (28) pour provoquer l'application de cette dernière contre la nappe de carcasse (5) mise sous une forme toroïdale.

46. Dispositif selon la revendication 43, dans lequel ledit tambour (3) est un tambour de construction.

47. Dispositif selon la revendication 43 ou 46, dans lequel ledit tambour (3) est un tambour de mise en forme.

48. Dispositif de fabrication pour pneus de roues de véhicules selon l'une ou plusieurs des revendications 43 à 47, dans lequel ladite enveloppe expansible (1) est définie selon l'une quelconque des revendications 2 à 13.
